# EUROPÄISCHE PATENTSCHRIFT

(11) **EP 3 867 607 B1**
(45) Veröffentlichungstag und Bekanntmachung des Hinweises auf die Patenterteilung: **23.11.2022**
(21) Anmeldenummer: 20701570.2
(22) Anmeldetag: 21.01.2020
(51) Int. Cl.: G01F 23/02

(54) **VORRICHTUNG ZUM ANZEIGEN EINES FLUIDNIVEAUS**
APPARATUS FOR INDICATING A FLUID LEVEL
DISPOSITIF POUR L'AFFICHAGE D'UN NIVEAU DE FLUIDE

(30) Priorität: 23.02.2019 DE 102019001310
(43) Veröffentlichungstag der Anmeldung: 25.08.2021
(73) Patentinhaber: HYDAC Accessories GmbH, 66280 Sulzbach/Saar (DE)
(72) Erfinder: KÄFER, Jürgen, 66578 Schiffweiler (DE); HANUS, Markus, 66386 St. Ingbert (DE); SCHMITT, Martin, 66917 Knopp-Labach (DE)
(74) Vertreter: Bartels und Partner, Patentanwälte
(86) Internationale Anmeldenummer: PCT/EP2020/051342
(87) Internationale Veröffentlichungsnummer: WO 2020/169289

(56) Entgegenhaltungen:
- EP-A1- 3 333 554
- US-A1- 2007 158 056
- US-A1- 2016 305 810

## Beschreibung

Die Erfindung betrifft eine Vorrichtung zum Anzeigen eines Fluidniveaus mit einem Vorrichtungsgehäuse mit den Merkmalen im Oberbegriff von Anspruch 1.

Vorrichtungen dieser Art sind bekannt, vgl. DE 10 2005 018 897 A1. In der Fachsprache bezeichnet man solche Vorrichtungen auch als Flüssigkeitsstandanzeigegeräte, wobei das Flüssigkeitsniveau optisch, beispielsweise durch visuelle Beobachtung, oder elektrisch angezeigt wird, indem ein elektrisches Signal erzeugt wird. Dieses Signal kann als Warnmeldung oder zur Niveauregulierung verwendet werden. Das anzuzeigende oder zu kontrollierende Medium in Form des Fluids gelangt von dem betreffenden, den Vorrat des Fluids enthaltenden Drittbauteil, üblicherweise einem Tank, über das Anschlussstück zum Anzeigekörper. Wenn dieser in der Art eines Steigoder Anzeigerohres ausgebildet und durchsichtig ist, lässt sich der Flüssigkeitspegel durch unmittelbare visuelle Beobachtung feststellen. Alternativ oder zusätzlich kann im Steigrohr ein Schwimmerkörper vorgesehen sein, der entsprechend dem Niveau des im Drittbauteil oder Tank befindlichen Fluids steigt oder sinkt. Wenn eine elektrische Signalerzeugung vorgesehen ist, dann betätigt der Schwimmerkörper einen Schaltkontakt eines elektrischen Schaltkreises, um eine gewünschte Anzeige zu gewinnen und/oder eine Steuerfunktion auszuüben.

Als Fluide, die mittels derartiger Vorrichtungen angezeigt und/oder kontrolliert werden sollen, kommen insbesondere Druckflüssigkeiten in Frage, wie Mineralöl nach DIN 51524, Teil 1 und 2, Wasser-Öl-Emulsionen und synthetische Flüssigkeiten, wie Hydraulikflüssigkeiten auf Phosphat-Esterbasis. Bei in einem Drittbauteil, wie einem Tank, befindlichen Druckflüssigkeiten oder Hydraulikflüssigkeiten eignen sich die Vorrichtungen für den direkten Anbau an das Drittbauteil oder den Tank. Hierbei ist es Stand der Technik, das Anschlussstück der Vorrichtung an der Öffnung der Wand des Drittbauteils durch eine Verschraubung mittels des Festlegeteils zu fixieren. Für die Betriebssicherheit dieser Vorrichtungen ist es ausschlaggebend, dass der Fluidpfad, der von der Innenseite des Drittbauteils über das Anschlussstück ins Innere des Anzeigekörpers führt, an mehreren Dichtungsbereichen einwandfrei und dauerhaft abgedichtet ist. Um diesen Forderungen zu genügen, ist es Stand der Technik, bei der Fertigung der Anschlussstücke, insbesondere was die Geometrie der Dichtflächen anbelangt, sehr enge Toleranzen einzuhalten, was entsprechend hohe Fertigungskosten verursacht.

Die EP 3 333 554 A1 beschreibt eine Vorrichtung zum Anzeigen eines Fluidniveaus mit den Merkmalen im Oberbegriff von Anspruch 1 mit einem Vorrichtungsgehäuse, das ein Sichtfenster aufweist, das die Sicht freigibt auf einen durchsichtigen Anzeigekörper, der über mindestens ein Anschlussstück, das einen Hohlraum aufweist, mit dem Fluid zumindest teilweise befüllbar ist, dessen Hohlraum von einem Festlegeteil durchgriffen ist, das eine Fluidführung aufweist und das dem Festlegen des Vorrichtungsgehäuses an einem Drittbauteil, wie einem Fluid-Vorratstank, dient.

Weitere Vorrichtungen zum Anzeigen eines Fluidniveaus gehen aus der US 2007/0158056 A1 und der US 2016/0305810 A1 hervor.

Ausgehend von diesem Stand der Technik stellt sich die Erfindung die Aufgabe, eine Vorrichtung der eingangs genannten Gattung zur Verfügung zu stellen, die sich, obwohl sie rationell und kostengünstig herstellbar ist, durch eine hohe Betriebssicherheit auszeichnet.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das Anschlussstück eine Tragstruktur aufweist, zumindest bestehend aus einzelnen Rippen, die plattenförmige Wandteile des Anschlussstückes miteinander verbinden, und dass die Tragstruktur den Hohlraum umfasst. Dadurch, dass, im Unterschied zum Stand der Technik, das Anschlussstück kein Vollkörper, sondern eine aus einzelnen Rippen gebildete Struktur ist, ist zum einen eine Verringerung der Kosten durch geringere erforderliche Werkstoffmengen erreicht. Zum anderen vermeidet die Rippenstruktur die bei einem Vollkörper gegebenen, großen Unterschiede der Wandstärke in den verschiedenen Bereichen des Anschlussstücks. Bei den thermischen Belastungen, denen das Anschlussstück im Betrieb aufgrund der Temperaturunterschiede des Fluids ausgesetzt ist, ist dank gleicher Wandstärken auch der Verzug minimiert, so dass die Geometrie der Abdichtbereiche nicht beeinträchtigt wird, was bleibende Betriebssicherheit gewährleistet. Auch bei der Herstellung, beispielsweise im Rahmen eines Spritzgussverfahrens, erlaubt die Rippenstruktur eine weitgehende Maßhaltigkeit und es kommt zu nahezu gleichmäßigen Schrumpfvorgängen beim Abkühlen des Anschlussstücks; anders als bei Bauteilen mit blockartiger Materialanhäufung kommt es nicht zu Einfallstellen.

Bei vorteilhaften Ausführungsbeispielen weist der Hohlraum für den Durchgriff des Festlegeteils einen zylinderförmigen Durchgriffsabschnitt auf, in den fluidführend ein Versorgungsabschnitt für den Anzeigekörper einmündet, der auf eine Ringaufnahme aufsetzbar ist, die den Versorgungsabschnitt zumindest teilweise umfasst.

Mit Vorteil kann die Anordnung hierbei so getroffen sein, dass die Ringaufnahme in der Art eines Ellipsoids ausgebildet ist, die den Sitz für einen Dichtring ausbildet, der das Innere des Anzeigekörpers gegenüber der Umgebung abdichtet, der auf einem Wandteil des Anschlussstückes aufsitzt, der dem Anzeigekörper benachbart ist. Dadurch, dass der Anzeigekörper in Entsprechung zur elliptischen Form des Ringkörpers eine Art Flachrohr bildet, steht im Vergleich zur Gehäusetiefe der Vorrichtung für das Sichtfenster eine größere Breite zur Verfügung, was trotz kompakter Bauweise der Vorrichtung eine ausreichende Breite des Sichtfensters zur Verfügung stellt. Gleichzeitig bildet der eine Wandteil der Rippenstruktur eine den Anzeigekörper abstützende Lagerfläche. Dadurch, dass an der Ringstruktur des Ellipsoids ein Sitz für den Dichtring ausgebildet ist, in den der Dichtring vor der Montage gegen Abfallen gehalten ist, ist auch der Montagevorgang beim Aufsetzen des Anzeigekörpers einfach und sicher ausführbar. Für die Lagesicherung des Dichtringes kann der Sitz mit Vorteil durch eine in der Ringaufnahme ausgebildete Ringnut mit flachem Boden gebildet sein.

Bei vorteilhaften Ausführungsbeispielen bestehen die Rippen aus Längsund Querrippen, von denen die Längsrippen parallel zur Längsachse des Anzeigekörpers verlaufend das eine Wandteil mit dem weiteren Wandteil verbinden, das das Anschlussstück nach außen hin mit begrenzt, wobei die Querrippen paarweise einander gegenüberliegend jeweils von einer zuordenbaren Längsrippe durchgriffen sind, die sich parallel zur Längsachse des Durchgriffsabschnitts erstrecken. Dadurch beschreiben die Rippen mit ihren Außenrändern den Umriss eines quaderförmigen, gerundete Eckbereiche aufweisenden Klotzes, der in gleicher Weise wie ein als Vollkörper gestaltetes Anschlussstück die der Gehäuseform angepasste Anlageflächen für das Vorrichtungsgehäuse in stabiler Weise bildet.

Mit Vorteil weist der Durchgriffsabschnitt auf seiner dem Vorrichtungsgehäuse zugewandten Seite eine Ringaufnahme für die bündige Aufnahme einer Ringdichtung auf. Vorzugsweise ist auch an dieser Ringaufnahme eine ebene Anlagefläche anstelle einer durch eine Schräge gebildeten Dichtfläche vorgesehen. Bei bündiger Aufnahme der Ringdichtung befindet sich im Montagezustand das Vorrichtungsgehäuse in flächiger Anlage mit dem Anschlussstück.

Vorteilhafterweise bildet die Umrandung des Durchgriffsabschnitts auf ihrer dem Drittbauteil zugewandten Seite eine vorspringende ringförmige Erhöhung aus, um die Dichtwirkung zu erhöhen. In vorteilhafter Weise ist die ringförmige respektive kreisförmige Erhöhung mittig auf der flächenförmig ausgebildeten Umrandung angeordnet.

Als besonders rationell und kostengünstig herstellbares Bauteil kann das Anschlussstück, als Spritzgussteil konzipiert, aus einem Kunststoffmaterial, wie PA6, hergestellt sein, das bevorzugt glasfaserverstärkt ist. Mit Vorteil kann hierbei ein entsprechender Glasfaseranteil vorgesehen sein.

Bei besonders vorteilhaften Ausführungsbeispielen ist das Vorrichtungsgehäuse, im Querschnitt gesehen, ein U-förmiges Profilstück, wobei das Anschlussstück stopfenartig ein zugeordnetes freies Ende des Vorrichtungsgehäuses abschließt.

Mit Vorteil kann die Anordnung hierbei so getroffen sein, dass das zweite Wandteil des Anschlussstücks über das Ende des Profilstücks vorsteht und an seinem freien Ende ein Wellenprofil trägt. Mit Vorteil kann hierbei das vorstehende Ende den U-förmigen Endrand des Profilstücks bündig übergreifen und dadurch eine haptisch und optisch vorteilhafte Abdeckung der Endkante des Profilstücks bilden. Das Wellenprofil trägt dabei mit zur Stabilisierung des Anschlussstücks bei.

Ferner kann mit Vorteil an gegenüberliegenden Enden des Profilstücks je ein Anschlussstück angeordnet sein, wobei die beiden Ringdichtungen, einmal für den Verschraubungsabschnitt und einmal für den Durchgriffsabschnitt des Anschlussstücks, gleich ausgebildet sind. Die Vermeidung der Verwechslungsgefahr durch Einsatz gleicher Dichtungen, vorzugsweise in Form von O-Ringen, begünstigt die einfache und sichere Montage.

Nachstehend ist die Erfindung anhand eines in der Zeichnung dargestellten Ausführungsbeispiels im Einzelnen erläutert. Es zeigen:
- Fig. 1: eine perspektivische Schrägansicht des Ausführungsbeispiels der erfindungsgemäßen Vorrichtung;

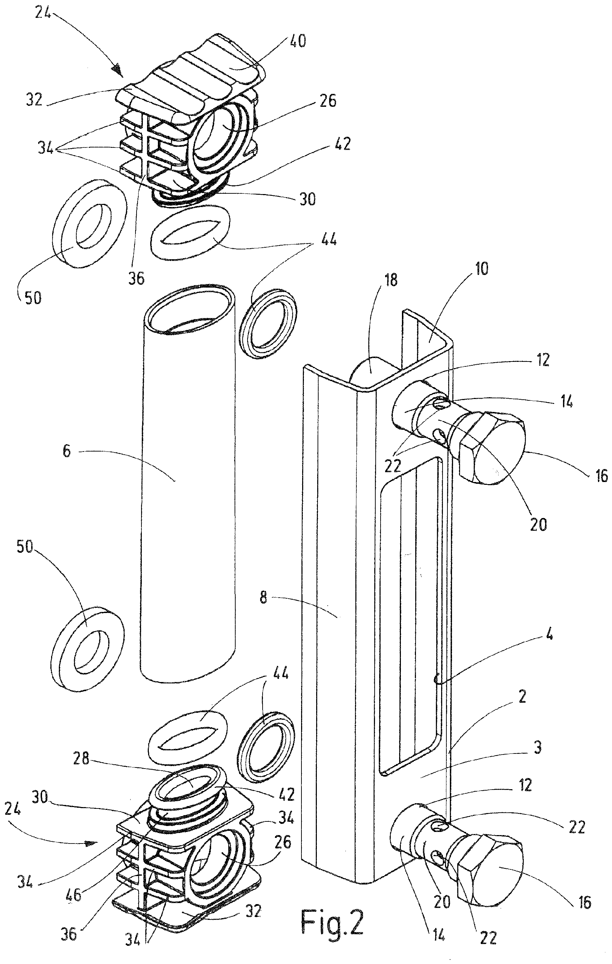

- Fig. 2: in perspektivischer Schrägansicht die in der Art einer Explosionszeichnung auseinandergezogen dargestellten Einzelteile des Ausführungsbeispiels;
- Fig. 3: eine gegenüber Fig. 2 vergrößert gezeichnete perspektivische Schrägansicht eines Anschlussstücks des Ausführungsbeispiels, gesehen auf die dem Vorrichtungsgehäuse zugewandte Vorderseite; und
- Fig. 4: eine der Fig. 3 entsprechende perspektivische Schrägansicht des Ausführungsbeispiels, gesehen auf die einem Drittbauteil, wie einem Tank, zugewandte Rückseite.

Das in der Zeichnung dargestellte Ausführungsbeispiel weist ein Vorrichtungsgehäuse 2 auf, das in seiner Vorderseite 3 einen Ausschnitt aufweist, der ein Sichtfenster 4 bildet, das die Sicht auf einen Anzeigekörper 6 freigibt. Bei diesem handelt es sich um ein Steigrohr aus einem durchsichtigen Kunststoffmaterial, das die unmittelbare visuelle Beobachtung des Flüssigkeitspegels eines im Anzeigekörper 6 befindlichen Fluids ermöglicht. Das Vorrichtungsgehäuse 2 besteht aus einem Profilstück aus Aluminium, Stahl oder Edelstahl, das einen U-förmigen Querschnitt mit seitlichen Profilschenkeln 8 und 10 aufweist, die sich an den die Vorderseite 3 bildenden Profilsteg seitlich anschließen und den Anzeigekörper 6 seitlich umgeben. In der Vorderseite 3 ist in der Nähe des oberen Endes des Profils und des unteren Endes des Profils jeweils mittig eine Bohrung 12 ausgebildet, die für den Durchgriff je einer Hohlschraube 14 vorgesehen sind. Das Sichtfenster 4, das durch einen langgestreckten Ausschnitt in der Vorderseite 3 gebildet ist, endet in gleichen Abständen von oberer und unterer Bohrung 12. Die Hohlschrauben 14 weisen am einen Ende ihres Schafts einen Sechskantkopf 16 und am anderen Ende ein Außengewinde 18 sowie eine von diesem Ende ausgehende, koaxiale Innenbohrung auf, die sich bis zu einem im Außendurchmesser verringerten Schaftteil 20 erstreckt, der sich in axialem Abstand sowohl vom Kopf 16 als auch vom Außengewinde 18 befindet. In diesem Schaftteil 20 sind Querbohrungen 22 gebildet, die die Fluidverbindung zur Innenbohrung der Hohlschraube 14 bilden.

Wie beim erwähnten Stand der Technik erfolgt die Fluidverbindung zwischen dem Drittbauteil, wie einem Tank (nicht dargestellt), über ein Anschlussstück 24, das einen inneren Hohlraum in Form eines zylindrischen Durchgriffsabschnitts 26 aufweist. Für die Bildung einer Fluidverbindung vom Durchgriffsabschnitt 26 zum den Anzeigekörper bildenden Steigrohr 6 mündet im Anschlussstück 24 ein Versorgungsabschnitt 28 in den Durchgriffsabschnitt 26. Die Fluidverbindung zwischen dem Durchgriffsabschnitt 26 und dem Drittbauteil (Tank) erfolgt über die Hohlschraube 14, die im Montagezustand den Durchgriffsabschnitt 26 durchgreift und mit ihrem endseitigen Außengewinde 18 eine (nicht gezeigte) Verschraubung bildet, durch die das Vorrichtungsgehäuse 2 samt Anschlussstück 24 und Steigrohr 6 am Drittbauteil festgelegt ist. In diesem Montagezustand befindet sich der im Durchmesser verringerte Schaftteil 20 der Hohlschraube 14 im Bereich der Einmündung des Versorgungsabschnitts 28 in den Durchgriffsabschnitt 26, so dass über die Axialbohrung der Hohlschraube 14 und deren Querbohrungen 22 der Fluidweg zum Versorgungsabschnitt 28 gebildet ist.

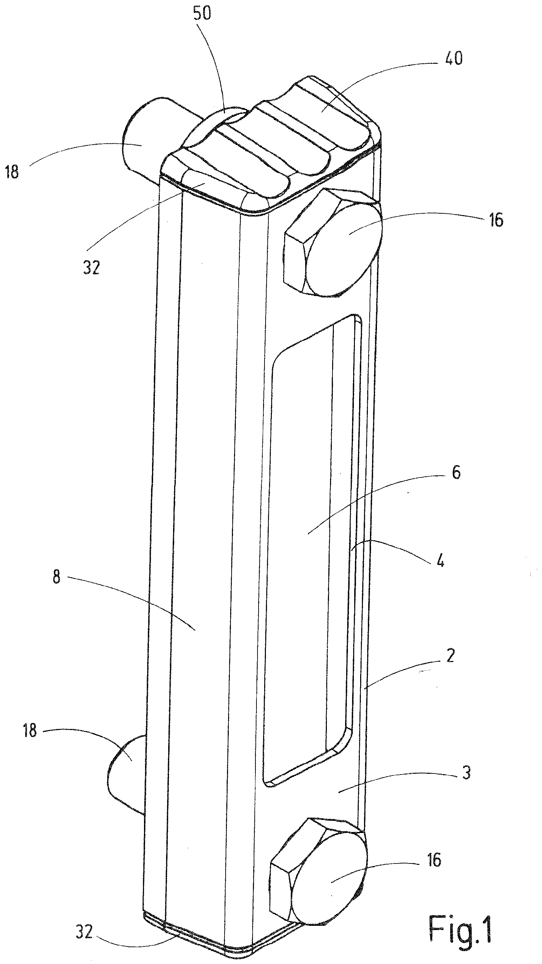

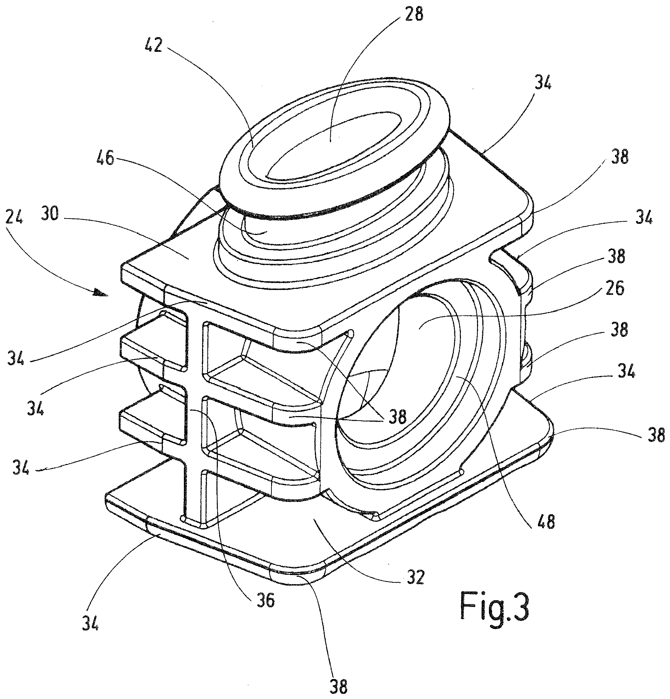

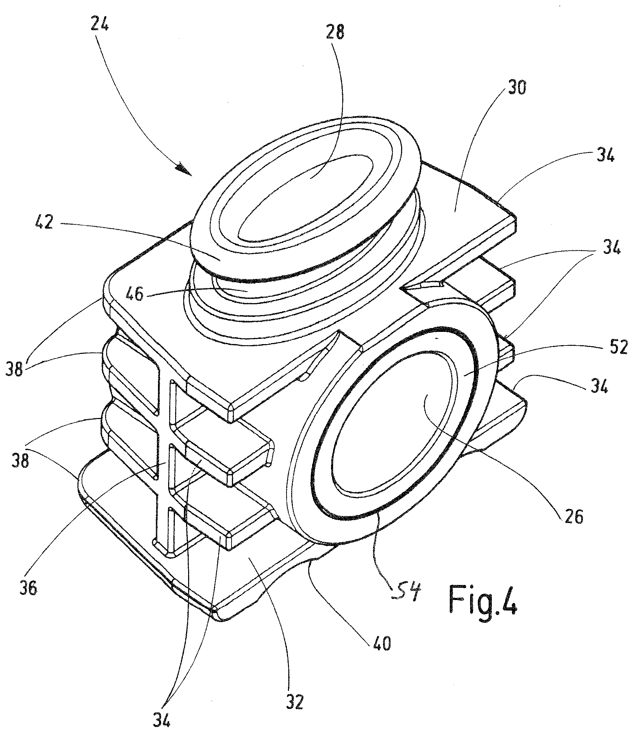

Anders als beim Stand der Technik ist das Anschlussstück 24 kein Vollkörper, sondern weist eine Tragstruktur auf, die aus Rippen und mit diesen verbundenen Wandteilen gebildet ist. Im Einzelnen weist die Tragstruktur, wie am deutlichsten den Fig. 3 und 4 entnehmbar ist, ein plattenförmiges Wandteil 30 auf der dem Steigrohr 6 zugewandten Seite und auf der hierzu entgegengesetzten Außenseite ein plattenförmiges Wandteil 32 auf. Mit ihren paarweise einander gegenüberliegenden, beidseits neben dem Durchgriffsabschnitt 26 verlaufenden Seitenrändern bilden die Wandteile 30 und 32 Querrippen 34, die durch je eine mittig gelegene Längsrippe 36 miteinander verbunden sind, die sich parallel zur Längsachse des Versorgungsabschnitts 28 erstrecken. Die Wandteile 30 und 32 bilden die obere bzw. untere Begrenzungswand des Anschlussstücks 24. Die Quer- und Längsrippen 34, 36 beschreiben mit ihren Außenseiten und den gerundeten Eckbereichen 38 die Form eines Klotzes, der als Formkörper der Profilinnenseite des das Vorrichtungsgehäuse 2 bildenden Profilstücks angepasst ist, so dass im zusammengebauten Zustand durch die Rippen 34, 36 Anlageflächen für das Gehäuse 2 gebildet sind. Das die Außenseite bildende Wandteil 32 ist im Umriss etwas größer als der Umriss des inneren Wandteils 30 und der zwischen den Wandteilen 30 und 32 gelegenen Rippen 34, so dass bei dem in Fig. 1 gezeigten Montagezustand das Anschlussstück 24 einen stopfenartigen Abschluss des Gehäuses 2 bildet, wobei das Wandteil 32 den freien Endrand des Gehäuses 2 übergreift. Wie ebenfalls in Fig. 1 am deutlichsten gezeigt, weist die Außenseite des Wandteils 32 ein Wellenprofil 40 auf.

An der Oberseite des Wandteils 30 setzt sich der Durchgriffsabschnitt 28 in einer Ringaufnahme 42 fort, die durch einen vom Wandteil 30 gebildeten Stutzen in Form eines Ellipsoids gebildet ist, dessen Achse senkrecht zur Achse des Durchgriffsabschnitts 26 verläuft. Bei auf die Ringaufnahme 42 aufgestecktem Steigrohr 6 ist die Abdichtung mittels eines O-Rings 44 gebildet, für den in der Ringaufnahme 42 eine Ringnut 46 mit ebenem Nutboden gebildet ist. Wie am deutlichsten der Fig. 3 entnehmbar ist, ist an den dem Vorrichtungsgehäuse 2 zugewandten Endbereich des Durchgriffsabschnitts 26 eine Ringfläche 48 gebildet, die die Aufnahme für einen O-Ring 44 der gleichen Art bildet, wie er an der Ringaufnahme 42 vorgesehen ist.

Auf der gegenüberliegenden Seite des Anschlussstücks 24, die in Fig. 4 sichtbar ist, ist auf einer kreisförmigen Fläche 52, die eben verläuft und eine zylindrische Durchtrittsfläche als Teil des Durchgriffsabschnitts 26 umfasst, vorzugsweise mittig eine umlaufende Erhebung 54 vorgesehen, die nach außen vorsteht und bei Anlage mit einem Drittbauteil, wie einem Tank, eine erhöhte Dichtkraftwirkung in dem diesbezüglichen Anlagebereich mit sich bringt. Die Ringfläche 52 bildet insoweit eine Flachdichtung mit dem Drittbauteil aus. Ferner ist die Erhebung 54 im Querschnitt gesehen dreieckförmig ausgebildet. Wie üblich, ist an beiden Enden des Vorrichtungsgehäuses 2 die mechanische und fluidische Verbindung mit dem Drittbauteil über ein weiteres Anschlussstück 24 und weitere Gleichteile gebildet. Das jeweilige Anschlussstück 24 ist vorzugsweise als Spritzgussteil aus einem glasfaserverstärkten Kunststoffmaterial, wie PA6, hergestellt, wobei mit Vorteil ein vorgebbarer Glasfaseranteil vorgesehen ist.

## Patentansprüche

1. Vorrichtung zum Anzeigen eines Fluidniveaus mit einem Vorrichtungsgehäuse (2), das ein Sichtfenster (4) aufweist, das die Sicht freigibt auf einen durchsichtigen Anzeigekörper (6), der über mindestens ein Anschlussstück (24), das einen Hohlraum (26) aufweist, mit dem Fluid zumindest teilweise befüllbar ist, dessen Hohlraum (26) von einem Festlegeteil (14) durchgriffen ist, das eine Fluidführung (22) aufweist und das dem Festlegen des Vorrichtungsgehäuses (2) an einem Drittbauteil, wie einem Fluid-Vorratstank, dient, **dadurch gekennzeichnet, dass** das Anschlussstück (24) eine Tragstruktur aufweist, zumindest bestehend aus einzelnen Rippen (34, 36), die plattenförmige Wandteile (30, 32) des Anschlussstücks (24) miteinander verbinden, und dass die Tragstruktur den Hohlraum (26) umfasst.

2. Vorrichtung nach Anspruch 1, **dadurch gekennzeichnet, dass** der Hohlraum für den Durchgriff des Festlegeteils (14) einen zylinderförmigen Durchgriffsabschnitt (26) aufweist, in den fluidführend ein Versorgungsabschnitt (28) für den Anzeigekörper (6) einmündet, der auf eine Ringaufnahme (42) aufsetzbar ist, die den Versorgungsabschnitt (28) zumindest teilweise umfasst.

3. Vorrichtung nach Anspruch 2, **dadurch gekennzeichnet, dass** die Ringaufnahme (42) in der Art eines Ellipsoids ausgebildet ist, die den Sitz (46) für einen Dichtring (44) ausbildet, der das Innere des Anzeigekörpers (6) gegenüber der Umgebung abdichtet, der auf dem einen Wandteil (30) des Anschlussstücks (24) aufsitzt, der dem Anzeigekörper (6) benachbart ist.

4. Vorrichtung nach Anspruch 2 oder 3, **dadurch gekennzeichnet, dass** die Rippen aus Längs- (36) und Querrippen (34) bestehen, von denen die Längsrippen (36) parallel zur Längsachse des Anzeigekörpers (6) verlaufend das eine Wandteil (30) mit einem weiteren Wandteil (32) verbinden, der das Anschlussstück (24) nach außen hin mit begrenzt, und dass die Querrippen (34) paarweise einander gegenüberliegend jeweils von einer zuordenbaren Längsrippe (36) durchgriffen sind, die sich parallel zur Längsachse des Durchgriffsabschnitts (26) erstrecken.

5. Vorrichtung nach einem der Ansprüche 2 bis 4, **dadurch gekennzeichnet, dass** der Durchgriffsabschnitt (26) auf seiner dem Vorrichtungsgehäuse (2) zugewandten Seite eine Ringaufnahme (42) für die bündige Aufnahme einer Ringdichtung (44) aufweist.

6. Vorrichtung nach einem der Ansprüche 2 bis 5, **dadurch gekennzeichnet, dass** der Durchgriffsabschnitt (26) auf seiner dem Drittbauteil zugewandten Seite eine vorspringende ringförmige Anlagefläche (52) ausbildet für die Anlage einer weiteren Ringdichtung (44).

7. Vorrichtung nach einem der vorstehenden Ansprüche, **dadurch gekennzeichnet, dass** das Anschlussstück (24), als Spritzgussteil konzipiert, aus einem Kunststoffmaterial, wie PA6, besteht, das bevorzugt glasfaserverstärkt ist.

8. Vorrichtung nach einem der vorstehenden Ansprüche, **dadurch gekennzeichnet, dass** das Vorrichtungsgehäuse, im Querschnitt gesehen, ein U-förmiges Profilstück (2) ist und dass das Anschlussstück (24) stopfenartig ein zugeordnetes freies Ende des Vorrichtungsgehäuses (2) abschließt.

9. Vorrichtung nach einem der Ansprüche 4 bis 8, **dadurch gekennzeichnet, dass** das zweite Wandteil (32) über das Ende des Profilstücks (2) vorsteht und an seinem freien Ende ein Wellenprofil (40) trägt.

10. Vorrichtung nach einem der Ansprüche 2 bis 9, **dadurch gekennzeichnet, dass** an gegenüberliegenden Enden des Profilstücks (2) je ein Anschlussstück (24) angeordnet ist und dass die beiden Ringdichtungen (44), einmal für den Versorgungsabschnitt (28) und einmal für den Durchgriffsabschnitt (26) des Anschlussstücks (24), gleich ausgebildet sind.

11. Vorrichtung nach einem der Ansprüche 2 bis 10, **dadurch gekennzeichnet, dass** mittels einer kreisförmigen Erhebung (54) als einstückiger Bestandteil einer Ringfläche (52), die den Durchgriffsabschnitt (26) umfasst, die Dichtwirkung der Flachdichtung erhöht ist.

## Claims

1. Device for displaying a fluid level having a device housing (2) that comprises a viewing window (4) that provides a view of a transparent display body (6), which can be partially filled via at least one connection piece (24), which comprises a cavity (26), with the fluid, the cavity (26) thereof being penetrated by a fixing element (14) that comprises a fluid guide passage (22) and serves to fix the device housing (2) to a third component such as a fluid storage tank, **characterised in that** the connection piece (24) has a support structure (24), at least consisting of individual ribs (34, 36), which connect plate-shaped wall portions (30, 32) of the connection piece (24) together, and **in that** the support structure surrounds the cavity (26).

2. Device according to claim 1, **characterised in that** the cavity for penetration of the fixing element (14) comprises a cylindrical penetration element (26) into which a supply element (28) for the display body (6) emerges in a fluid-conveying manner, said supply element being able to be fitted onto a ring mount (42), which at least partially surrounds the supply element (28).

3. Device according to claim 2, **characterised in that** the ring mount (42) is designed in the form of an ellipsoid, which forms the seat (46) for a sealing ring (44), which seals the inside of the display body (6) from the environment, said ring being seated on one wall portion (30) of the connection piece (24) which is adjacent to the display body (66).

4. Device according to either claim 2 or claim 3, **characterised in that** the ribs consist of longitudinal (36) and transverse ribs (34), wherein the longitudinal ribs (36), which run parallel to the longitudinal axis of the display body (6), connect one wall portion (30) to a further wall portion (32), which defines the connection piece (24) with respect to the exterior, and **in that** the transverse ribs (34) are each penetrated in pairs, opposite one another, by an assignable longitudinal rib (36), which extend parallel to the longitudinal axis of the penetration element (26).

5. Device according to any of claims 2 to 4, **characterised in that** the penetration element (26) comprises, on its side facing the device housing (2), a ring mount (42) to allow an annular seal to be received in a flush manner.

6. Device according to any of claims 2 to 5, **characterised in that**, on its side facing the third component, the penetration element (26) forms a protruding annular contact surface (52) for positioning a further annular seal (44).

7. Device according to any of the preceding claims, **characterised in that** the connecting piece (24), which is designed as an injection-moulded part, is made from a plastics material, such as PA6, which is preferably fibreglass-reinforced.

8. Device according to any of the preceding claims, **characterised in that** the device housing, when viewed in cross-section, is a U-shaped profile piece (2) and **in that** the connection piece (24) closes an assigned free end of the device housing (2) in the manner of a stopper.

9. Device according to any of claims 4 to 8, **characterised in that** the second wall portion (32) protrudes over the end of the profile piece (2) and has a corrugated profile (40) at its free end.

10. Device according to any of claims 2 to 9, **characterised in that** one connection piece (24) is arranged on respective opposite ends of the profile piece (2) and **in that** the two annular seals (44), one for the supply element (28) and one for the penetration element (26) of the connection piece (24), are designed in the same way.

11. Device according to any of claims 2 to 10, **characterised in that** the sealing effect of the flat seal is enhanced by means of a circular elevation (54) as a monobloc component of an annular surface (52), which surrounds the penetration element (26).

## Revendications

1. Dispositif d'affichage d'un niveau de fluide comprenant un boîtier (2) ayant un hublot (4), qui donne vue sur un corps (6) d'affichage transparent, lequel, par au moins une pièce (24) de raccordement, ayant une cavité (26), peut être rempli au moins en partie du fluide, dans la cavité (26) de laquelle pénètre une partie (14) de fixation, qui a une conduite (22) de fluide et qui sert à la fixation du boîtier (2) sur une pièce tierce, comme un réservoir de fluide, **caractérisé en ce que** la pièce (24) de raccordement a une structure porteuse constituée au moins de nervures (34, 36) individuelles, qui relient entre elles les parties (30, 32) de paroi en forme de plaque de la pièce (24) de raccordement, et **en ce que** la structure porteuse entoure la cavité (26).

2. Dispositif suivant la revendication 1, **caractérisé en ce que** la cavité a, pour la pénétration de la partie (14) de fixation, une partie (26) de pénétration de forme cylindrique, dans laquelle débouche, en conduisant du fluide, une partie (28) d'alimentation pour le corps (6) d'affichage, qui peut être mis sur un logement (42) annulaire, qui entoure au moins en partie la partie (28) d'alimentation.

3. Dispositif suivant la revendication 2, **caractérisé en ce que** le logement (42) annulaire est constitué à la manière d'un ellipsoïde, qui constitue le siège (46) d'un joint (44) à bague rendant étanche l'intérieur du corps (6) d'affichage par rapport à ce qui l'entoure et s'appliquant à la une partie (30) de paroi de la pièce (24) de raccordement, qui est voisine du corps (6) d'affichage.

4. Dispositif suivant la revendication 2 ou 3, **caractérisé en ce que** les nervures sont constituées de nervures (36) longitudinales et de nervures (34) transversales, dont les nervures (36) longitudinales relient, en s'étendant parallèlement à l'axe longitudinal du corps (6) d'affichage, la une partie (30) de paroi et une autre partie (32) de paroi, qui délimite vers l'extérieur la pièce (24) de raccordement, et **en ce que** les nervures (34) transversales sont pénétrées par paire, en s'opposant l'une à l'autre, respectivement par une nervure (36) longitudinale pouvant être associée, qui s'étendent parallèlement à l'axe longitudinal de la partie (26) de pénétration.

5. Dispositif suivant l'une des revendications 2 à 4, **caractérisé en ce que** la partie (26) de pénétration a du côté, tourné vers le boîtier (2), un logement (42) annulaire de réception à affleurement d'un joint (44) à bague.

6. Dispositif suivant l'une des revendications 2 à 5, **caractérisé en ce que** la partie (26) de pénétration constitue, du côté tourné vers la pièce tierce, une surface (52) annulaire d'application en saillie pour l'application d'un autre joint (44) à bague.

7. Dispositif suivant l'une des revendications précédentes, **caractérisé en ce que** la pièce (24) de raccordement, conçue sous la forme d'une pièce moulée par injection, est en une matière plastique, comme PA6, de préférence renforcée par de la fibre de verre.

8. Dispositif suivant l'une des revendications précédentes, **caractérisé en ce que** le boîtier est, considéré en coupe transversale, une pièce (2) profilée en forme de U, et **en ce que** la pièce (24) de raccordement ferme, à la manière d'un bouchon, une extrémité libre associée du boîtier (2).

9. Dispositif suivant l'une des revendications 4 à 8, **caractérisé en ce que** la deuxième partie (32) de paroi est en saillie de l'extrémité de la pièce (2) profilée et porte un profilé (40) ondulé à son extrémité libre.

10. Dispositif suivant l'une des revendications 2 à 9, **caractérisé en ce qu'**aux extrémités opposées de la pièce (2) profilée est disposée respectivement une pièce (24) de raccordement, et **en ce que** les deux joints (44) à bague sont constitués pareillement d'une part pour la partie (28) d'alimentation et d'autre part pour la partie (26) de pénétration de la pièce (24) de raccordement.

11. Dispositif suivant l'une des revendications 2 à 10, **caractérisé en ce qu'**au moyen d'une surélévation (54) circulaire, comme partie constitutive d'une seule pièce d'une surface (52) annulaire, qui entoure la partie (26) de pénétration, l'effet d'étanchéité du joint plat est augmenté.
